# EUROPEAN PATENT APPLICATION

(11) **EP 4 535 537 A1**
(43) Date of publication of application: **09.04.2025**
(21) Application number: 24746955.4
(22) Date of filing: 02.01.2024
(51) Int. Cl.: H01M 50/258, H01M 50/204, H01M 50/244

(54) **BATTERY MODULE, BATTERY PACK AND VEHICLE**

(30) Priority: 28.01.2023 CN 202320196315 U
(71) Applicant: ZHEJIANG ZEEKR INTELLIGENT TECHNOLOGY CO., LTD., Ningbo, Zhejiang 315899 (CN); Viridi Energy Mobility Technology (Ningbo) Co., Ltd., Ningbo, Zhejiang 315336 (CN); Zhejiang Geely Holding Group Co., Ltd., Hangzhou, Zhejiang 310051 (CN)
(72) Inventor: GUAN, Huiping, Ningbo, Zhejiang 315899 (CN); DONG, Lina, Ningbo, Zhejiang 315899 (CN); WANG, Xudong, Ningbo, Zhejiang 315899 (CN)
(74) Representative: Range, Christopher William
(86) International application number: PCT/CN2024/070193
(87) International publication number: WO 2024/156248

(57) **Abstract**

Provided are a battery module (100), a battery pack, and a vehicle. The battery module (100) includes a plurality of battery cells (1), a busbar (2), a busbar support (3), and a protection cover (4). The busbar (2) is configured to electrically connect two battery cells (1) and limit a position of the busbar support (3) at the plurality of battery cells (1). The busbar support (3) has a first mounting portion (31) and a second mounting portion (32). The protection cover (4) is located at a side of the busbar support (3) away from the plurality of battery cells (1). The protection cover (4) has a third mounting portion (41) and a fourth mounting portion (42). The protection cover (4) is fixed to the busbar support (3) by engaging the first mounting portion (31) and the second mounting portion (32) with the third mounting portion (41) and the fourth mounting portion (42), respectively.

## Description

### CROSS-REFERENCE TO RELATED APPLICATION

This application is based on and claims a priority to Chinese Patent Application No. 202320196315.2, filed on January 28, 2023, the entire content of which is incorporated herein by reference.

### FIELD

The present disclosure relates to the field of battery technologies, and particularly, to a battery module, a battery pack, and a vehicle.

### BACKGROUND

In the related art, for a battery module in which a battery cell is horizontally placed, for example, a blade battery, a busbar support is usually disposed at a side of the battery module. A protection cover of the battery module is assembled corresponding to the busbar support, and the protection cover is also mounted at the side of the battery module, which causes inconvenience in mounting the protection cover. Meanwhile, when the protection cover and the busbar support are mounted at the side of the battery module, it is difficult to ensure the assembly reliability.

### SUMMARY

The present disclosure aims to solve one of the technical problems in the related art at least to some extent.

To this end, an object of the present disclosure is to provide a battery module.

Another object of the present disclosure is to provide a battery pack.

A further object of the present disclosure is to provide a vehicle.

To achieve the above object, in a first aspect, embodiments of the present disclosure provide a battery module. The battery module includes a plurality of battery cells, a busbar and a busbar support, and a protection cover. The busbar is configured to electrically connect two battery cells of the plurality of battery cells and limit a position of the busbar support at the plurality of battery cells. The busbar support has a first mounting portion and a second mounting portion. The protection cover is located at a side of the busbar support away from the plurality of battery cells. The protection cover has a third mounting portion and a fourth mounting portion. The protection cover is fixed to the busbar support by engaging the first mounting portion and the second mounting portion with the third mounting portion and the fourth mounting portion, respectively.

In the battery module according to the embodiments of the present disclosure, the first mounting portion and the second mounting portion are provided at the busbar support, and the third mounting portion and the fourth mounting portion are provided at the protection cover. The protection cover and the busbar support can be fixedly mounted by means of the engagement between the first mounting portion and the third mounting portion and the engagement between the second mounting portion and the fourth mounting portion. In this way, an assembly process is simple and convenient and has high reliability.

To achieve the above object, in a second aspect, the embodiments of the present disclosure provide a battery pack. The battery pack includes the battery module according to the embodiments of the first aspect.

In the battery pack according to the embodiments of the present disclosure, the first mounting portion and the second mounting portion are provided at the busbar support, and the third mounting portion and the fourth mounting portion are provided at the protection cover. The protection cover and the busbar support can be fixedly mounted by means of the engagement between the first mounting portion and the third mounting portion and the engagement between the second mounting portion and the fourth mounting portion. In this way, an assembly process is simple and convenient and has high reliability.

To achieve the above object, in a third aspect, the embodiments of the present disclosure provide a vehicle. The vehicle includes the battery pack according to the embodiment of the second aspect.

In the vehicle according to the embodiment of the present disclosure, by providing the battery pack, the first mounting portion and the second mounting portion are provided at the busbar support, and the third mounting portion and the fourth mounting portion are provided at the protection cover. The protection cover and the busbar support can be fixedly mounted by means of the engagement between the first mounting portion and the third mounting portion and the engagement between the second mounting portion and the fourth mounting portion. In this way, an assembly process is simple and convenient and has high reliability.

Additional aspects and advantages of the embodiments of the present disclosure will be given at least in part in the following description, or become apparent at least in part from the following description, or can be learned from practicing of the embodiments of the present disclosure.

### BRIEF DESCRIPTION OF THE DRAWINGS

FIG. 1 is an exploded view of a battery module according to an embodiment of the present disclosure.
FIG. 2 is a schematic view of a battery cell, a busbar, a busbar support, and a circuit board according to an embodiment of the present disclosure.
FIG. 3 is an assembly view of a battery module according to an embodiment of the present disclosure.
FIG. 4 is a perspective view of busbar support according to an embodiment of the present disclosure.
FIG. 5 is a perspective view of a protection cover according to an embodiment of the present disclosure.
FIG. 6 is a sectional view of a busbar support and a protection cover in an assembly process according to an embodiment of the present disclosure.
FIG. 7 is a sectional view of a busbar support and a protection cover after assembly according to an embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only and intended to explain, rather than limiting, the present disclosure.

A battery module 100, a battery pack, and a vehicle according to the embodiments of the present disclosure will be described in detail below with reference to the accompanying drawings.

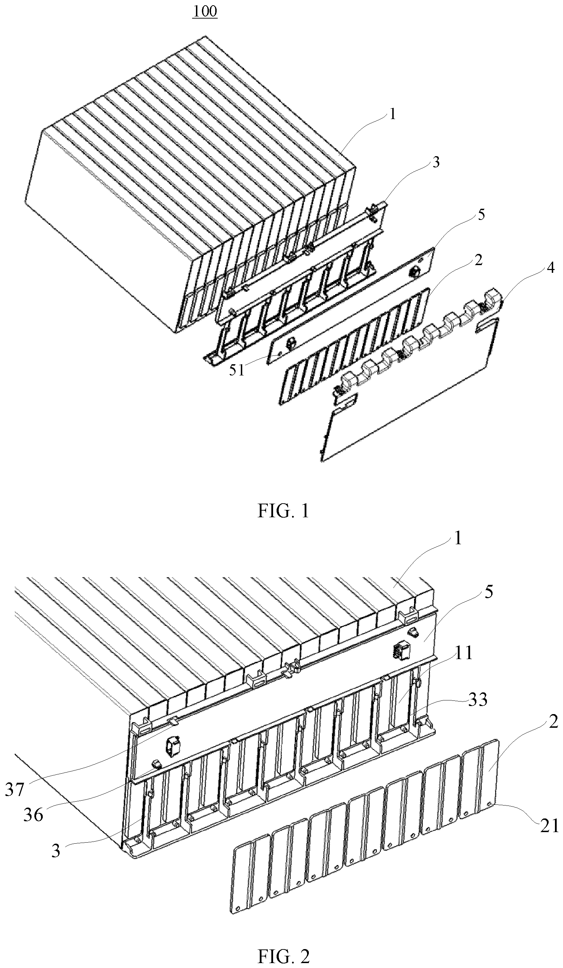

As illustrated in FIG. 1 to FIG. 7, according to the embodiments of a first aspect of the present disclosure, the battery module 100 includes a plurality of battery cells 1, a busbar 2, a busbar support 3, and a protection cover 4. The busbar 2 is configured to electrically connect two battery cells 1 and limit a position of the busbar support 3 at the plurality of battery cells 1. The busbar support 3 has a first mounting portion 31 and a second mounting portion 32. The protection cover 4 is located at a side of the busbar support 3 away from the plurality of battery cells 1. The protection cover 4 has a third mounting portion 41 and a fourth mounting portion 42. The protection cover 4 is fixed to the busbar support 3 by engaging the first mounting portion 31 and the second mounting portion 32 with the third mounting portion 41 and the fourth mounting portion 42, respectively.

In an embodiment of the present disclosure, as illustrated in FIG. 1, the battery module 100 includes the plurality of battery cells 1, and the plurality of battery cells 1 is horizontally arranged in sequence. Further, as illustrated in FIG. 2, a plurality of busbars 2 is provided, and each busbar 2 is configured to electrically connect two adjacent battery cells 1. In this way, the plurality of battery cells 1 can be connected in series by means of the busbars 2. It should be noted that the busbars 2 and the busbar 3 are preassembled before the busbars 2 are electrically connected to the battery cells 1. The busbars 2 are preassembled at the side of the busbar support 3 away from the battery cells 1. After the busbars 2 and the busbar support 3 are preassembled, the busbars 2 is welded to the corresponding battery cells 1. Thereafter, the position of the busbar support 3 is limited between the battery cells 1 and the busbars 2, enabling the busbar support 3 to be fixedly mounted.

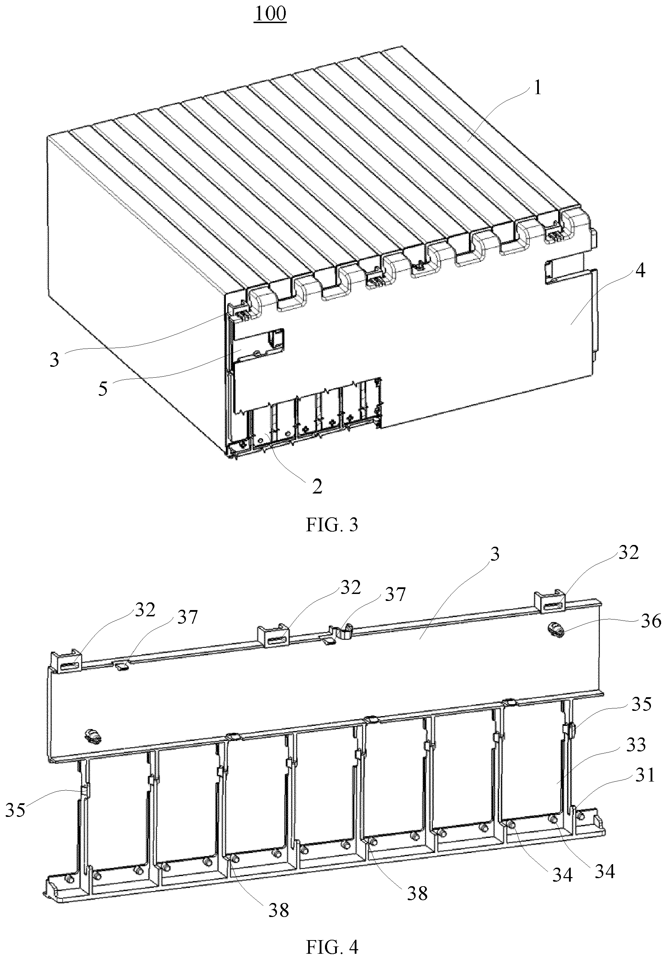

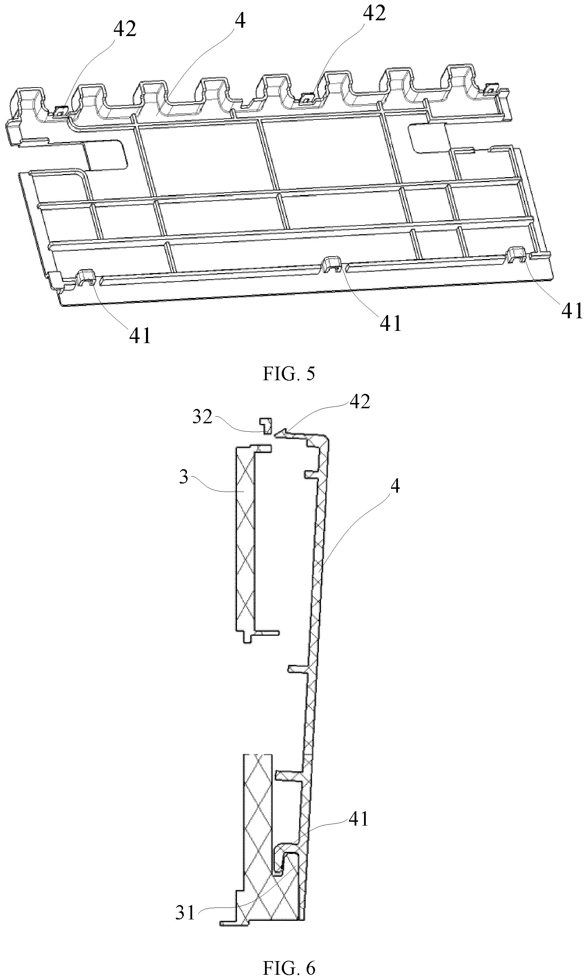

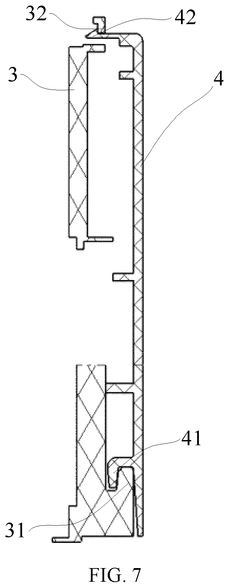

Further, as illustrated in FIG. 4 to FIG. 7, the busbar support 3 has the first mounting portion 31 and the second mounting portion 32, and the protection cover 4 has the third mounting portion 41 and the fourth mounting portion 42. The protection cover 4 is mounted at the side of the busbar support 3 away from the battery cells 1. As illustrated in FIG. 6, when mounting the protection cover 4 onto the busbar support 3, the protection cover 4 is inclined at a certain angle to allow the first mounting portion 31 and the third mounting portion 41 to be engaged, and the protection cover 4 is then rotated towards the busbar support 3 by taking the third mounting portion 41 as an axial direction, to enable the second mounting portion 32 to be engaged with the fourth mounting portion 42. As illustrated in FIG. 7, the protection cover 4 and the busbar support 3 can be fixed mounted based on the engagement between the first mounting portion 31 and the third mounting portion 41 and the engagement between the second mounting portion 32 and the fourth mounting portion 42. The entire mounting process is simple and convenient. The first mounting portion 31 and the third mounting portion 41 as well as the second mounting portion 32 and the fourth mounting portion 42 can be tightly mounted, thereby ensuring assembly reliability between the protection cover 4 and the busbar support 3.

In the battery module 100 according to the embodiments of the present disclosure, by providing the first mounting portion 31 and the second mounting portion 32 on the busbar support 3 and providing the third mounting portion 41 and the fourth mounting portion 42 on the protection cover 4, the protection cover 4 and the busbar support 3 can be fixed mounted based on the engagement between the first mounting portion 31 and the third mounting portion 41 and the engagement between the second mounting portion 32 and the fourth mounting portion 42. The assembly process is simple and convenient and has high reliability.

In some embodiments of the present disclosure, one of the first mounting portion 31 and the third mounting portion 41 is a positioning groove, and the other one of the first mounting portion 31 and the third mounting portion 41 is a positioning protrusion. The positioning protrusion is mounted in the positioning groove.

In an embodiment of the present disclosure, one of the first mounting portion 31 and the third mounting portion 41 is provided as the positioning groove, while the other one of the first mounting portion 31 and the third mounting portion 41 is provided as the positioning protrusion. That is, when the first mounting portion 31 is the positioning groove, the third mounting portion 41 is the positioning protrusion; and when the first mounting portion 31 is the positioning protrusion, the third mounting portion 41 is the positioning groove. Further, as illustrated in FIG. 4 to FIG. 7, as an example, the first mounting portion 31 is the positioning protrusion and the third mounting portion 41 is the positioning groove. As illustrated in FIG. 6, when assembling the protection cover 4 and the busbar support 3, the protection cover 4 is inclined at a certain angle, to engage and assemble the positioning protrusion of the busbar support 3 with the positioning groove of the protection cover 4, allowing the positioning protrusion to be mounted in the positioning groove. The positioning protrusion abuts against an inner wall of the positioning groove. In this way, the protection cover 4 can be mounted on the busbar support 3, and the position of the protection cover 4 and the busbar support 3 can be quickly limited, thereby improving assembly efficiency.

In some embodiments of the present disclosure, one of the second mounting portion 32 and the fourth mounting portion 42 is a first mounting hole, and the other one of the second mounting portion 32 and the fourth mounting portion 42 is a first buckle portion. The first buckle portion is adapted to engage with the first mounting hole.

In an embodiment of the present disclosure, one of the second mounting portion 32 and the fourth mounting portion 42 is provided as the first mounting hole, and the other of the second mounting portion 32 and the fourth mounting portion 42 is provided as the first buckle portion. That is, when the second mounting portion 32 is the first mounting hole, the fourth mounting portion 42 is the first buckle portion; and when the second mounting portion 32 is the first buckle portion, the fourth mounting portion 42 is the first mounting hole. Further, as illustrated in FIG. 4 to FIG. 7, as an example, the second mounting portion 32 is the first mounting hole and the fourth mounting portion 42 is the first buckle portion. When assembling the protection cover 4 and the busbar support 3, the protection cover 4 is inclined at a certain angle to engage and assemble the first mounting portion 31 with the second mounting portion 32. It should be noted that the busbar support 3 further has a support platform 38. During the engaging and assembling of the first mounting portion 31 and the second mounting portion 32, the support platform 38 can provide support for the protection cover 4. Then, by taking the third mounting portion 41 as an axial direction, the protection cover 4 is rotated towards the busbar support 3 to allow the first buckle portion to gradually approach the first mounting hole, until a buckle of the first buckle portion passes through the first mounting hole and is engaged with a side of the busbar support 3 close to the battery cell 1. Therefore, the protection cover 4 can be tightly mounted at the busbar support 3 through the engagement between the first buckle portion and the first mounting hole, thereby improving assembly reliability of the protection cover 4 and the busbar support 3.

In some embodiments of the present disclosure, as illustrated in FIG. 4 and FIG. 5, a plurality of first mounting portions 31, a plurality of second mounting portions 32, a plurality of third mounting portions 41, and a plurality of fourth mounting portions 42 are provided. The plurality of first mounting portions 31 corresponds to the plurality of third mounting portions 41 in one-to-one correspondence. The plurality of second mounting portions 32 corresponds to the plurality of fourth mounting portions 42 in one-to-one correspondence.

In an embodiment of the present disclosure, the number of the first mounting portion 31, the number of the second mounting portion 32, the number of the third mounting portion 41, and the number of the fourth mounting portion 42 are set according to specific requirements, which are not specifically limited herein. In addition, when assembling the protection cover 4 and the busbar support 3, it is ensured that the plurality of first mounting portions 31 and the plurality of third mounting portions 41 are assembled in a one-to-one correspondence, and it is ensured that the plurality of second mounting portions 32 and the plurality of fourth mounting portions 42 are assembled in a one-to-one correspondence. Thus, by providing the plurality of first mounting portions 31, the plurality of second mounting portions 32, the plurality of third mounting portions 41, and the plurality of fourth mounting portions 42, the protection cover 4 can be more tightly mounted on the busbar support 3, thereby further improving the assembly reliability of the protection cover 4 and the busbar support 3.

In some embodiments of the present disclosure, as illustrated in FIG. 2 and FIG. 4, the busbar support 3 has a plurality of first positioning holes 33. Each battery cell 1 has an electrode column 11. The electrode column 11 of the battery cell 1 is assembled in a corresponding first positioning hole 33. The busbar 2 is located at the side of the busbar support 3 away from the battery cells 1 and connected between the electrode columns 11 of two battery cells 1.

In an embodiment of the present disclosure, as illustrated in FIG. 2, each battery cell 1 has the electrode column 11, and an end surface of the electrode column 11 is vertically arranged. The busbar support 3 has the plurality of first positioning holes 33, and each first positioning hole 33 corresponds to and are matched with the electrode columns 11 of two adjacent battery cells 1. That is, every two adjacent electrode columns 11 are assembled fitted in one same first positioning hole 33. Further, each first positioning hole 33 has a limiting surface provided at a lower portion of the first positioning hole 33. The busbar 2 is engaged with the first positioning hole 33, and a side of the busbar 2 close to the battery cell 1 abuts against the limiting surface, allowing the busbar 2 to be preassembled at the side of the busbar support 3 away from the battery cells 1. After the busbar 2 is preassembled with the busbar support 3, the busbar 2 is welded to two adjacent electrode columns 11, and thereafter, the busbar support 3 is limited between the battery cells 1 and the busbar 2, thereby realizing the fixed mounting of the busbar support 3.

In some embodiments of the present disclosure, as illustrated in FIG. 2, the first positioning hole 33 has an inner side wall abutting against the corresponding electrode column 11.

In an embodiment of the present disclosure, each first positioning hole 33 corresponds to and is matched with the electrode columns 11 of two adjacent battery cells 1. The inner side wall of the first positioning hole 33 abuts against the corresponding electrode columns 11 to allow the busbar support 3 to be positioned by means of the battery cell 1 and the first positioning hole 33, thereby improving the assembly efficiency of the busbar 2 and the busbar support 3. In addition, the inner side wall of the first positioning hole 33 abuts against the electrode columns 11, and thus the electrode column 11 can provide support for the busbar support 3 in a vertical direction, facilitating an integral assembly of the busbar support 3 and the busbar 2 with the battery cells 1.

In some embodiments of the present disclosure, as illustrated in FIG. 2 and FIG. 4, the busbar support 3 further includes a first positioning member 34. The busbar 2 has a second positioning hole 21. The first positioning member 34 passes through and is disposed in the second positioning hole 21.

In an embodiment of the present disclosure, the busbar support 3 further includes a plurality of first positioning members 34. The first positioning member 34 is correspondingly disposed to the limiting surface located at the lower portion of the first positioning hole 33. In an embodiment of the present disclosure, as illustrated in FIG. 4, each limiting surface is provided with two first positioning members 34. The first positioning member 34 may be a positioning pin, a positioning column, or a positioning protrusion, which is not specifically limited herein. Each busbar 2 correspondingly has a second positioning hole 21. The number of the second positioning holes 21 is consistent with the number of the first positioning members 34 arranged at each limiting surface. As illustrated in FIG. 2, each busbar 2 has two second positioning holes 21. When the busbar 2 and the busbar support 3 are preassembled, the first positioning member 34 passes through and is disposed in the second positioning hole 21, to quickly position the busbar 2 and the busbar support 3, thereby greatly improving preassembly efficiency of the busbar 2 and the busbar support 3.

In some embodiments of the present disclosure, as illustrated in FIG. 4, the busbar support 3 further has a fifth mounting portion 35. The fifth mounting portion 35 is configured to limit a position of the busbar 2 at the busbar support 3 by abutting against the corresponding busbar 2.

In an embodiment of the present disclosure, the busbar support 3 further has a plurality of fifth mounting portions 35, and the fifth mounting portions 35 are arranged at two sides of an outer frame of the first positioning hole 33. In an embodiment of the present disclosure, as illustrated in FIG. 4, two sides of the outer frame of each first positioning hole 33 are each provided with one fifth mounting portion 35. The fifth mounting portion 35 may be, but is not limited to, a buckle. The positioned busbar 2 is engaged with the busbar support 3 by means of the fifth mounting portions 35, thereby limiting the position of the busbar 2. Then, the busbar 2 is welded to the electrode columns 11 of the battery cells 1, thereby fixedly mounting the busbar support 3 to the battery cells 1.

In some embodiments of the present disclosure, as illustrated in FIG. 1 to FIG. 3, the battery module further includes a circuit board 5 fixed to the busbar support 3. In an embodiment of the present disclosure, some components such as wirings and sensors are disposed inside the battery module 100, and these components are usually disposed on the circuit board 5. Therefore, the circuit board 5 is required to be mounted on the busbar support 3, in order to obtain an operation state of the battery cells 1 inside the battery and improve a battery operation management level.

In some embodiments of the present disclosure, as illustrated in FIG. 1, FIG. 2, and FIG. 4, the busbar support 3 further includes a second positioning member 36. The circuit board 5 has a third positioning hole 51. The second positioning member 36 passes through and is disposed in the third positioning hole 51.

In an embodiment of the present disclosure, as illustrated in FIG. 4, the busbar support 3 further includes a plurality of second positioning members 36. The second positioning member 36 may be a positioning pin, a positioning column, or a positioning protrusion, which is not specifically limited herein. As illustrated in FIG. 1, the circuit board 5 has the third positioning hole 51, correspondingly. The number of the third positioning holes 51 is the same as the number of the second positioning members 36. When assembling the circuit board 5 to the busbar support 3, the second positioning member 36 passes through and is disposed in the third positioning hole 51. In this way, the position of the circuit board 5 and the busbar support 3 can be quickly limited, and mounting efficiency of the circuit board 5 and the busbar support 3 is greatly improved.

In some embodiments of the present disclosure, as illustrated in FIG. 4, the busbar support 3 further has a sixth mounting portion 37. The sixth mounting portion 37 is configured to limit a position of the circuit board 5 at the busbar support 3 by abutting against the circuit board 5.

In an embodiment of the present disclosure, the busbar support 3 further includes a plurality of sixth mounting portions 37. The sixth mounting portion 37 may be, but is not limited to, a buckle. The positioned circuit board 5 is engaged with the busbar support 3 by means of the sixth mounting portions 37, thereby limit the position of the circuit board 5. In this way, the circuit board 5 can be fixedly mounted, and thus, components such as wirings and sensors can be mounted on the circuit board 5 for real-time monitoring data of the battery module 100.

It should be noted that the second positioning member 36 may be provided with a buckle structure. Thus, the second positioning member 36 can have an engagement function while limiting the position of the circuit board 5, thereby further improving the assembly reliability of the circuit board 5.

The battery pack according to the embodiments of the second aspect of the present disclosure includes the battery module 100 according to the embodiment of the first aspect.

In the battery pack according to the embodiments of the present disclosure, by providing the battery module 100 described above, the first mounting portion 31 and the second mounting portion 32 are provided at the busbar support 3, and the third mounting portion 41 and the fourth mounting portion 42 are provided at the protection cover 4. The protection cover 4 and the busbar support 3 can be fixedly mounted by means of the engagement between the first mounting portion 31 and the third mounting portion 41 and the engagement between the second mounting portion 32 and the fourth mounting portion 42. The assembly process is simple and convenient and has high reliability.

The vehicle according to the embodiments of the third aspect of the present disclosure includes the battery pack according to the embodiments of the second aspect.

In the vehicle according to the embodiments of the present disclosure, the first mounting portion 31 and the second mounting portion 32 are provided at the busbar support 3, and the third mounting portion 41 and the fourth mounting portion 42 are provided at the protection cover 4. The protection cover 4 and the busbar support 3 can be fixedly mounted by means of the engagement between the first mounting portion 31 and the third mounting portion 41 and the engagement between the second mounting portion 32 and the fourth mounting portion 42. The assembly process is simple and convenient and has high reliability.

In the present disclosure, it should be understood that the orientation or position relationship indicated by the terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" should be construed to refer to the orientation or the position as illustrated in the drawings, merely for the convenience of describing the present disclosure and simplifying the description, rather than indicating or implying that the pointed apparatus or element must have a specific orientation, or be constructed and operated in a specific orientation, and therefore cannot be understood as a limitation of the present disclosure.

In addition, terms "first" and "second" are only used for descriptive purposes, and cannot be understood as indicating or implying relative importance or implicitly indicating the number of the indicated technical features. Therefore, the features associated with "first" and "second" may explicitly or implicitly include at least one of the features. In the description of the present disclosure, "plurality" means at least two, unless otherwise specifically defined.

In the present disclosure, unless otherwise clearly specified and limited, terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, the specific meaning of the above-mentioned terms in the present disclosure can be understood according to specific circumstances.

In the present disclosure, unless specifically indicated and defined otherwise, the first feature "on" or "under" the second feature may mean that the first feature is in direct contact with the second feature, or that the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

In the description of this specification, description with reference to the terms "an embodiment", "some embodiments", "exemplary embodiments", "examples" "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. Furthermore, different embodiments or examples and features of different embodiments or examples described in this specification may be combined and combined by one skilled in the art without contradiction.

Although the embodiments of the present disclosure have been illustrated and described above, it should be understood that the above embodiments are merely illustrative, and they cannot be construed as limitations of the present disclosure. Those skilled in the art can make changes, alternatives, and modifications to the above embodiments without departing from the scope of the present disclosure.

## Claims

1. A battery module, comprising:
a plurality of battery cells;
a busbar and a busbar support, the busbar being configured to electrically connect two battery cells of the plurality of battery cells and limit a position of the busbar support at the plurality of battery cells, and the busbar support having a first mounting portion and a second mounting portion; and
a protection cover located at a side of the busbar support away from the plurality of battery cells, the protection cover having a third mounting portion and a fourth mounting portion, the protection cover being fixed to the busbar support by engaging the first mounting portion and the second mounting portion with the third mounting portion and the fourth mounting portion, respectively.

2. The battery module according to claim 1, wherein:
one of the first mounting portion and the third mounting portion is a positioning groove; and
the other one of the first mounting portion and the third mounting portion is a positioning protrusion, the positioning protrusion being mounted in the positioning groove.

3. The battery module according to claim 1 or 2, wherein:
one of the second mounting portion and the fourth mounting portion is a first mounting hole; and
the other one of the second mounting portion and the fourth mounting portion is a first buckle portion, the first buckle portion being adapted to engage into the first mounting hole.

4. The battery module according to any one of claims 1 to 3, wherein a plurality of first mounting portions, a plurality of second mounting portions, a plurality of third mounting portions, and a plurality of fourth mounting portions are provided, the plurality of first mounting portions corresponding to the plurality of third mounting portions in one-to-one correspondence, and the plurality of second mounting portions corresponding to the plurality of fourth mounting portions in one-to-one correspondence.

5. The battery module according to any one of claims 1 to 4, wherein:
the busbar support has a plurality of first positioning holes;
each of the plurality of battery cells has an electrode column assembled in a corresponding first positioning hole of the plurality of first positioning holes; and
the busbar is located at the side of the busbar support away from the plurality of battery cells and connected between electrode columns of two battery cells of the plurality of battery cells.

6. The battery module according to claim 5, wherein each of the plurality of first positioning holes has an inner side wall abutting against the corresponding electrode column.

7. The battery module according to claim 5 or 6, wherein:
the busbar support further has a first positioning member; and
the busbar has a second positioning hole, the first positioning member passing through and being disposed in the second positioning hole.

8. The battery module according to any one of claims 5 to 7, wherein the busbar support further has a fifth mounting portion, the fifth mounting portion being configured to limit a position of the busbar at the busbar support by abutting against the corresponding busbar.

9. The battery module according to any one of claims 1 to 4, further comprising a circuit board fixed to the busbar support.

10. The battery module according to claim 9, wherein:
the busbar support further has a second positioning member; and
the circuit board has a third positioning hole, the second positioning member passing through and being disposed in the third positioning hole.

11. The battery module according to claim 9 or 10, wherein the busbar support further has a sixth mounting portion, the sixth mounting portion being configured to limit a position of the circuit board at the busbar support by abutting against the circuit board.

12. A battery pack, comprising the battery module according to any one of claims 1 to 11.

13. A vehicle, comprising the battery pack according to claim 12.
